(19) Europäisches Patentamt
European Patent Office
Office européen des brevets

(11) **EP 3 518 537 A1**

(12) **EUROPEAN PATENT APPLICATION**

(43) Date of publication:
**31.07.2019 Bulletin 2019/31**

(51) Int Cl.:
*H04N 19/105* (2014.01)   *H04N 19/593* (2014.01)
*H04N 19/186* (2014.01)   *H04N 19/157* (2014.01)

(21) Application number: **18305073.1**

(22) Date of filing: **26.01.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **InterDigital VC Holdings, Inc.
Wilmington, Delaware 19809 (US)**

(72) Inventors:
• **LELEANNEC, Fabrice
35576 Cesson-Sévigné (FR)**
• **RACAPE, Fabien
35576 Cesson-Sévigné (FR)**
• **POIRIER, Tangi
35576 Cesson-Sévigné (FR)**

(74) Representative: **Huchet, Anne et al
InterDigital CE Patent Holdings
20, rue Rouget de Lisle
92130 Issy-les-Moulineaux (FR)**

(54) **METHOD AND APPARATUS FOR VIDEO ENCODING AND DECODING BASED ON A LINEAR MODEL RESPONSIVE TO NEIGHBORING SAMPLES**

(57)     Different implementations are described, particularly implementations for video encoding and decoding based on a linear model responsive to neighboring samples are presented. The encoding and decoding method comprises determining, for a block being encoded or decoded in a picture, at least one spatial neighboring template; determining, for the block being encoded or decoded, at least one linear model parameter based on reconstructed samples of the at least one spatial neighboring template; and encoding or decoding the block using a linear model based on the determined at least one linear model parameter. The encoding or decoding method further comprises determining a number of the reconstructed samples of the at least one spatial neighboring template corresponding to a power of two to be used in determining the at least one linear model parameter, the power of two being responsive to the width and the height of the block being encoded wherein the width and the height of the block being encoded are not equal. Various embodiments are presented in case width and/or height of a block is $3 \times 2^N$ or in case of rectangular blocks with one dimension much smaller than the other.

500

FIG. 5

**Description**

TECHNICAL FIELD

At least one of the present embodiments generally relates to, e.g., a method or an apparatus for video encoding or decoding, and more particularly, to a method or an apparatus for determining, for the block being encoded or decoded, at least one linear model parameter based on reconstructed samples of an at least one spatial neighboring template.

BACKGROUND

To achieve high compression efficiency, image and video coding schemes usually employ prediction, including motion vector prediction, and transform to leverage spatial and temporal redundancy in the video content. Generally, intra or inter prediction is used to exploit the intra or inter frame correlation, then the differences between the original image and the predicted image, often denoted as prediction errors or prediction residuals, are transformed, quantized, and entropy coded. To reconstruct the video, the compressed data are decoded by inverse processes corresponding to the entropy coding, quantization, transform, and prediction.

A recent addition to high compression technology includes a prediction model based on a linear modeling responsive to the neighborhood of the block being processed. In particular, some prediction parameters are computed, in the decoding process, based on samples located in a spatial neighborhood of the block being processed. Such spatial neighborhood contains already reconstructed picture samples and is called a template in the following. According to non-limiting examples, such prediction models with prediction parameters determined based on spatial neighborhood include the Cross-component linear model (CCLM), the Local Illumination Compensation (LIC), or the Bi-directional Optical flow (BIO). In the decoding process, some prediction parameters are determined based on some reconstructed picture samples, localized on the left and/or on the top of the block being processed. The complexity of the considered fixed-point calculation process is limited since the block being processed defining the neighboring samples is usually a square block of size a power of two. Besides, when left and top neighboring samples are reconstructed, a same weight, respectively for the left-neighborhood and the top-neighborhood of the block being processed, is considered in the determination of prediction parameters as the block is usually a square block. However, recent compression technology further adds new block partitions wherein a block of width or height being 3x2^N with Asymetric Binary Tree is used or wherein a rectangular block (non-square block) is also used. In other words, block width and block height exist that increase the complexity of the process for determining prediction parameters based on the neighboring reconstructed samples since the number of samples in the top and left template might not be equal and not be natively a power of two. Therefore, a method for determining, for the block being encoded or decoded, at least one linear model parameter based on reconstructed samples of an at least one spatial neighboring template compatible with asymmetric block partition or non-square block partition is therefore desirable.

SUMMARY

The purpose of the invention is to overcome at least one of the disadvantages of the prior art. For this purpose, according to a general aspect of at least one embodiment, a method for video encoding is presented, comprising determining, for a block being encoded in a picture, at least one spatial neighboring template; determining, for the block being encoded, at least one linear model parameter based on reconstructed samples of the at least one spatial neighboring template; and encoding the block using a linear model based on the determined at least one linear model parameter. The method further comprises determining a number of reconstructed samples of the at least one spatial neighboring template corresponding to a power of two, the number of reconstructed samples being used in determining the at least one linear model parameter, the power of two being responsive to the width and the height of the block being encoded.

According to another general aspect of at least one embodiment, a method for video decoding is presented, comprising determining, for a block being decoded, at least one spatial neighboring template; determining, for the block being decoded, at least one linear model parameter based on reconstructed samples of the at least one spatial neighboring template; and decoding the block using a linear model based on the determined at least one linear model parameter. The method further comprises determining a number of reconstructed samples of the at least one spatial neighboring template corresponding to a power of two, the number of reconstructed samples being used in determining the at least one linear model parameter, the power of two being responsive to the width and the height of the block being decoded. According to another general aspect of at least one embodiment, an apparatus for video encoding is presented, comprising means for determining, for a block being encoded in a picture, at least one spatial neighboring template; means for determining, for the block being encoded, at least one linear model parameter based on reconstructed samples of the at least one spatial neighboring template; and means for encoding the block using a linear model based on the determined at least one linear model parameter. The decoding apparatus further comprises means for determining a number of reconstructed samples of the at least one spatial neighboring template corresponding to a power of two, the number of reconstructed samples being used in means for determining the at least one linear model parameter, the power of two being responsive to the width and the height of the block being encoded. According to another general aspect of at least one embodiment, an apparatus for video decoding is presented, comprising means for determining, for a block being decoded, at least one spatial neighboring template; means for determining, for the block being decoded, at least one linear model parameter based on reconstructed samples of the at least one spatial neighboring template; and means for decoding the block using a linear model based on the determined at least one linear model parameter. The apparatus further comprises means for determining a number of reconstructed samples of the at least one spatial neighboring template corresponding to a power of two, the number of reconstructed samples being used in determining the at least one linear model parameter, the power of two being responsive to the width and the height of the block being decoded.

According to another general aspect of at least one embodiment, an apparatus for video encoding is provided, comprising one or more processors, and at least one memory. Wherein the one or more processors is configured to: determine, for a block being encoded in a picture, at least one spatial neighboring template; determine, for the block being encoded, at least one linear model parameter based on reconstructed samples of the at least one spatial neighboring template; and encode the block using a linear model based on the determined at least one linear model parameter. The one or more processors is further configured to determine a number of reconstructed samples of the at least one spatial neighboring template corresponding to a power of two, the number of reconstructed samples being used for determining the at least one linear model parameter, the power of two being responsive to the width and the height of the block being encoded.

According to another general aspect of at least one embodiment, an apparatus for video decoding is provided, comprising one or more processors and at least one memory. Wherein the one or more processors is configured to determine, for a block being decoded, at least one spatial neighboring template; determine, for the block being decoded, at least one linear model parameter based on reconstructed samples of the at least one spatial neighboring template; and decode the block using a linear model based on the determined at least one linear model parameter. The one or more processors is further configured to determine a number of reconstructed samples of the at least one spatial neighboring template corresponding to a power of two, the number of reconstructed samples being used in determining the at least one linear model parameter, the power of two being responsive to the width and the height of the block being decoded.

According to another general aspect of at least one embodiment, the at least one spatial neighboring template comprises each sample among samples a top neighboring line of the block being encoded or decoded, and among samples of a left neighboring line of the block being encoded or decoded.

According to another general aspect of at least one embodiment, at least one of the width and height of the block being encoded or decoded is not equal to a power of two.

According to another general aspect of at least one embodiment, at least one of the width and height of the block being encoded or decoded are not equal.

According to another general aspect of at least one embodiment, in case the width of the block being encoded or decoded is a multiple of 3, the determined number of reconstructed samples of a top spatial neighboring template is divided by 3 and wherein in case the height of the block being encoded or decoded is a multiple of 3, the determined number of reconstructed samples of a left spatial neighboring template is divided by 3.

According to another general aspect of at least one embodiment, in case the width of the block being encoded or decoded is a multiple of 3, the determined number of reconstructed samples of a top spatial neighboring template is multiplied by 2/3 and wherein in case the height of the block being encoded or decoded is a multiple of 3, the determined number of reconstructed samples of a left spatial neighboring template is multiplied by 2/3.

According to another general aspect of at least one embodiment, the determined number of reconstructed samples of a top spatial neighboring template and the determined number of reconstructed samples of a left spatial neighboring template are set to a same value being a power of two corresponding to the smallest dimension of the block being encoded or decoded.

According to another general aspect of at least one embodiment, the sum of the determined number of reconstructed samples of a top spatial neighboring template and of the determined number of reconstructed samples of a left spatial neighboring template is set to a power of two corresponding to the largest dimension of the block being encoded or decoded.

According to another general aspect of at least one embodiment, the linear model belongs to a set comprising cross-component linear mode, block based illumination compensation linear model, and bi-directional optical flow.

According to another general aspect of at least one embodiment, the at least one linear model parameter based on reconstructed samples of the at least one spatial neighboring template are obtained by minimizing a distortion between samples of the spatial neighboring template of the block being encoded or decoded and samples of the spatial neighboring template of a reference block of the block being encoded or decoded.

According to another general aspect of at least one embodiment, a non-transitory computer readable medium is presented containing data content generated according to the method or the apparatus of any of the preceding descriptions.

According to another general aspect of at least one embodiment, a signal is provided comprising video data generated according to the method or the apparatus of any of the preceding descriptions.

One or more of the present embodiments also provide a computer readable storage medium having stored thereon instructions for encoding or decoding video data according to any of the methods described above. The present embodiments also provide a computer readable storage medium having stored thereon a bitstream generated according to the methods described above. The present embodiments also provide a method and apparatus for transmitting the bitstream generated according to the methods described above. The present embodiments also provide a computer program product including instructions for performing any of the methods described.

BRIEF DESCRIPTION OF THE DRAWINGS

FIG. 1 illustrates a block diagram of an embodiment of an HEVC (High Efficiency Video Coding) video encoder.

FIG. 2 illustrates a block diagram of an embodiment of an HEVC video decoder.

FIG. 3 illustrates an example of divisions of a Coding Unit (CU) in an asymmetric binary tree of the Quad-Tree plus Binary Tree (QTBT) partitioning.

FIG. 4A, 4B, 4C and 4D are pictorial examples depicting the number of the reconstructed samples of the at least one spatial neighboring template.

FIG. 5 illustrates an example encoding method according to a general aspect of at least one embodiment.

FIG. 6 illustrates an example of a decoding method according to a general aspect of at least one embodiment.

FIG. 7, 8 9 and 10 illustrate various example of the determining of number of the reconstructed samples method according to a general aspect of at least one embodiment.

FIG. 11 illustrates a block diagram of an example apparatus in which various aspects of the embodiments may be implemented.

DETAILED DESCRIPTION

It is to be understood that the figures and descriptions have been simplified to illustrate elements that are relevant for a clear understanding of the present principles, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another.

Various embodiments are described with respect to the HEVC standard. However, the present principles are not limited to HEVC, and can be applied to other standards, recommendations, and extensions thereof, including for example HEVC or HEVC extensions like Format Range (RExt), Scalability (SHVC), Multi-View (MV-HEVC) Extensions and H.266. The various embodiments are described with respect to the encoding/decoding of a picture. They may be applied to encode/decode a part of picture, such as a slice, or a whole sequence of pictures.

Various methods are described above, and each of the methods comprises one or more steps or actions for achieving the described method. Unless a specific order of steps or actions is required for proper operation of the method, the order and/or use of specific steps and/or actions may be modified or combined.

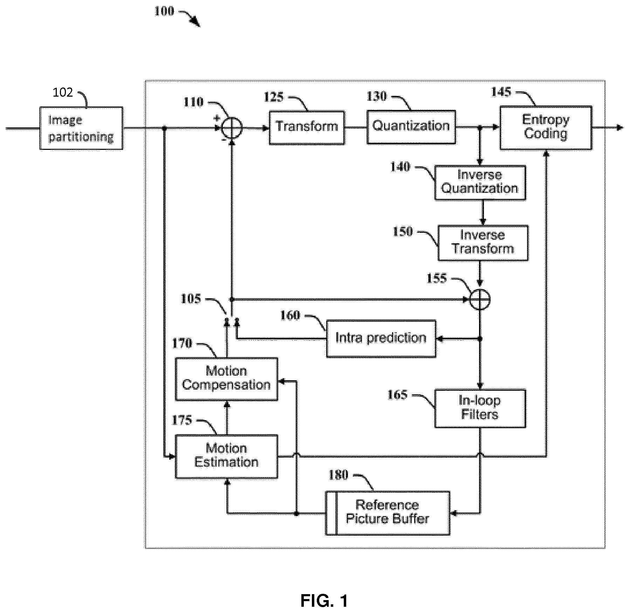

FIG. 1 illustrates an exemplary High Efficiency Video Coding (HEVC) encoder 100. HEVC is a compression standard developed by Joint Collaborative Team on Video Coding (JCT-VC) (see, e.g., "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265").

In HEVC, to encode a video sequence with one or more pictures, a picture is partitioned into one or more slices where each slice can include one or more slice segments. A slice segment is organized into coding units, prediction units, and transform units.

In the present application, the terms "reconstructed" and "decoded" may be used interchangeably, the terms "encoded" or "coded" may be used interchangeable, and the terms "picture" and "frame" may be used interchangeably. Usually, but not necessarily, the term "reconstructed" is used at the encoder side while "decoded" is used at the decoder side.

The HEVC specification distinguishes between "blocks" and "units," where a "block" addresses a specific area in a sample array (e.g., luma, Y), and the "unit" includes the collocated blocks of all encoded color components (Y, Cb, Cr, or monochrome), syntax elements, and prediction data that are associated with the blocks (e.g., motion vectors).

For coding, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block, and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB, and TB of the luma component applies to the corresponding CU, PU, and TU. In the present application, the term "block" can be used to refer, for example, to any of CTU, CU, PU, TU, CB, PB, and TB. In addition, the "block" can also be used to refer to a macroblock and a partition as specified in H.264/AVC or other video coding standards, and more generally to refer to an array of data of various sizes. Besides, the term "template", "neighboring template" or "spatial neighboring template" may be used interchangeably and comprises the reconstructed samples in the top neighboring line of a block and the reconstructed samples of a left neighboring line of a block.

In the exemplary encoder 100, a picture is encoded by the encoder elements as described below. The picture to be encoded is processed 102 in coding units CUs. The CU typically consists of a luma CB and the corresponding chroma CBs and syntax elements. The size LxL of a luma CB can be chosen as L = 16, 32, or 64 samples, with the larger sizes typically enabling better compression.

Each CU is encoded using either an intra or inter mode. When a CU is encoded in an intra mode, it performs intra prediction 160. In an inter mode, motion estimation 175 and compensation 170 are performed. The encoder decides 105 which one of the intra mode or inter mode to use for encoding the CU, and indicates the intra/inter decision by a prediction mode flag. Prediction residuals are calculated by subtracting 110 the predicted block from the original image block.

CUs in intra mode are predicted from reconstructed neighboring samples within the same slice. A set of intra prediction modes is available in HEVC, including a DC, a planar, and angular prediction modes. The intra prediction reference is reconstructed from the row and column adjacent to the current block. The reference extends over two times the block size in the horizontal and vertical directions using available samples from previously reconstructed blocks. When an angular prediction mode is used for intra prediction, reference samples can be copied along the direction indicated by the angular prediction mode.

The applicable luma intra prediction mode for the current block can be coded using two different options. If the applicable mode is included in a constructed list of three most probable modes (MPM), the mode is signaled by an index in the MPM list. Otherwise, the mode is signaled by a fixed-length binarization of the mode index. The three most probable modes are derived from the intra prediction modes of the top and left neighboring blocks.

For an inter CU, the corresponding coding block is further partitioned into one or more prediction blocks. Inter prediction is performed on the PB level, and the corresponding PU contains the information about how inter prediction is performed. The motion information (i.e., motion vector and reference picture index) can be signaled in two methods, namely, "merge mode" and "advanced motion vector prediction (AMVP)".

Motion compensation prediction can be performed using one or two reference pictures for prediction. In P slices, only a single prediction reference can be used for Inter prediction, enabling uni-prediction for a prediction block. In B slices, two reference picture lists are available, and uni-prediction or bi-prediction can be used. In bi-prediction, one reference picture from each of the reference picture lists is used.

In HEVC, the precision of the motion information for motion compensation is one quarter-sample (also referred to as quarter-pel or 1/4-pel) for the luma component and one eighth-sample (also referred to as 1/8-pel) for the chroma components for the 4:2:0 configuration. A 7-tap or 8-tap interpolation filter is used for interpolation of fractional-sample positions, i.e., 1/4, 1/2 and 3/4 of full sample locations in both horizontal and vertical directions can be addressed for luma.

The prediction residuals are then transformed 125 and quantized 130. The quantized transform coefficients, as well as motion vectors and other syntax elements, are entropy coded 145 to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized 140 and inverse transformed 150 to decode prediction residuals. Combining 155 the decoded prediction residuals and the predicted block, an image block is reconstructed. In-loop filters 165 are applied to the reconstructed picture, for example, to perform deblocking/SAO (Sample Adaptive Offset) filtering to reduce encoding artifacts. The filtered image is stored at a reference picture buffer 180.

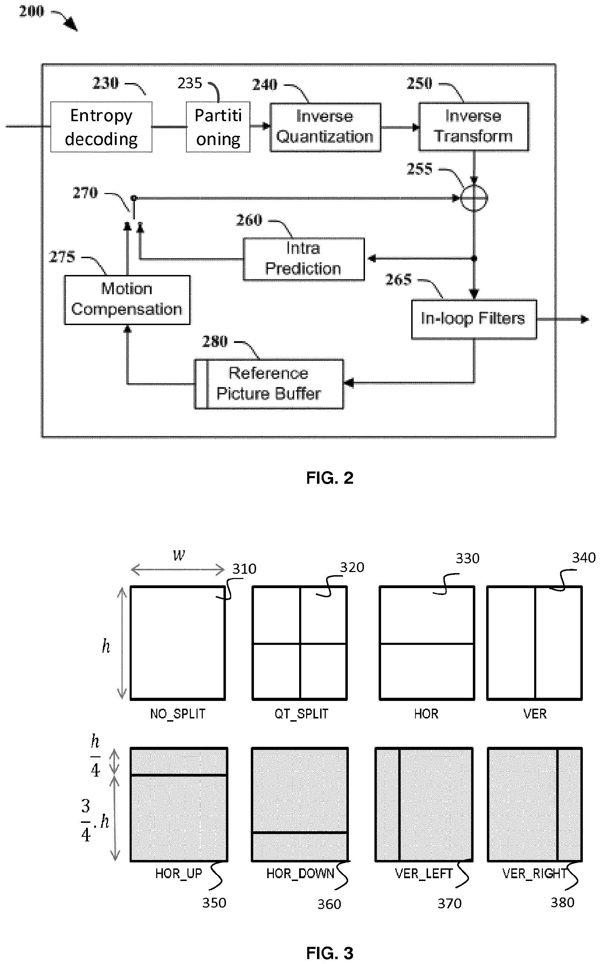

FIG. 2 illustrates a block diagram of an exemplary HEVC video decoder 200. In the exemplary decoder 200, a bitstream is decoded by the decoder elements as described below. Video decoder 200 generally performs a decoding pass reciprocal to the encoding pass as described in FIG. 1, which performs video decoding as part of encoding video data.

In particular, the input of the decoder includes a video bitstream, which may be generated by video encoder 100. The bitstream is first entropy decoded 230 to obtain transform coefficients, motion vectors, and other coded information. The block partition 235 is recovered. The transform coefficients are de-quantized 240 and inverse transformed 250 to decode the prediction residuals. Combining 255 the decoded prediction residuals and the predicted block, an image block is reconstructed. The predicted block may be obtained 270 from intra prediction 260 or motion-compensated prediction (i.e., inter prediction) 275. In-loop filters 265 are applied to the reconstructed image. The filtered image is stored at a reference picture buffer 280.

As mentioned, in HEVC, each CTU is represented by a Coding Tree in the compressed domain. This is a quadtree division of the CTU, where each leaf is called a Coding Unit (CU) as illustrated in FIG. 3 for CUs 310 and 320. Each CU is then given some Intra or Inter prediction parameters as prediction information. To do so, a CU may be spatially partitioned into one or more Prediction Units (PUs), each PU being assigned some prediction information. The Intra or Inter coding mode is assigned on the CU level.

To make improvements to HEVC, the reference software and/or documentation JEM (Joint Exploration Model) is being developed by the Joint Video Exploration Team (JVET). In one JEM version (e.g., "Algorithm Description of Joint Exploration Test Model 7", Document JVET-G1001_v1, Joint Video Exploration Team of ISO/IEC JTC1/SC29/WG11, 7th meeting, 13-21 July 2017, Torino, IT), some further prediction tools are supported that are based on linear model determined from neighborhood.

According to a first non-limiting example, to reduce the cross-component redundancy, a cross-component linear model (CCLM) prediction mode is used in the JEM, for which the chroma samples are predicted based on the reconstructed luma samples of the same CU by using a linear model as follows:

$$pred_C(i,j) = \alpha \cdot rec_L{}'(i,j) + \beta \qquad (1)$$

where $pred_C(i,j)$ represents the predicted chroma samples in a CU and $rec_L(i,j)$ represents the downsampled reconstructed luma samples of the same CU. Parameters $\alpha$ and $\beta$ are derived by minimizing the regression error (means square error) between the neighbouring reconstructed luma and chroma samples around the current block as follows:

$$\text{Error} = \sum_{n \in N}(C(n) - \alpha.L(n) - \beta)^2 \quad (2)$$

Which is resolved by:

$$\alpha = \frac{N \cdot \sum(L(n) \cdot C(n)) - \sum L(n) \cdot \sum C(n)}{N \cdot \sum(L(n) \cdot L(n)) - \sum L(n) \cdot \sum L(n)} \qquad (3)$$

$$\beta = \frac{\sum C(n) - \alpha \cdot \sum L(n)}{N} \qquad (4)$$

where $L(n)$ represents the down-sampled top and left neighboring reconstructed luma samples, $C(n)$ represents the top and left neighboring reconstructed chroma samples, and value of N is equal to twice of the minimum of width and height of the current chroma coding block. For a coding block with a square shape, the above two equations are applied directly.

According to another non-limiting example, a Local Illumination Compensation (LIC) based on a linear model is used to compensate for illumination changes between a picture being encoded and its reference pictures, using a scaling factor a and an offset b. It is enabled or disabled adaptively for each inter-mode coded coding unit (CU). When LIC applies for a CU, a least square error method is employed to derive the parameters a and *b* by using the neighbouring samples of the current CU and their corresponding reference samples. More specifically, the subsampled (2:1 subsampling) neighbouring samples of the CU and the corresponding samples (identified by motion information of the current CU or sub-CU) in the reference picture are used. The IC parameters are derived and applied for each prediction direction separately. The LIC parameters minimize the mean square error difference (MSE) between the top and left neighboring reconstructed samples *Cur(n)* of the current CU and the top and left neighboring reconstructed samples *Ref(n)* of their corresponding reference samples determined by the inter prediction as follows:

$$(a_i, b_i) = \underset{(a,b)}{\mathrm{argmin}}\left(\sum_{n \in N}(Cur(n) - a.Ref(n) - b)^2\right) (5)$$

Solving equation 5 leads to the following for linear model parameters $a_{min}$ and $b_{min}$.

$$a_{min} = \left(\frac{\sum Ref(n) \times Cur(n) - \frac{\sum Ref(n) \times \sum Cur(n)}{N}}{\sum Cur(n)^2 - \frac{\sum Ref(n) \times \sum Ref(n)}{N}}\right) (6)$$

$$b_{min} = \frac{\sum Cur(n)}{N} - a_{min} \times \frac{\sum Ref(n)}{N} \quad (7)$$

The skilled in the art will appreciate that for a square block of size from 4x4 to 256x256, the division by N can advantageously be implemented using a right shift.

Yet another non-limiting example using linear model based on neighboring template described in JEM version 7 is the Bi-directional Optical flow (BIO) which provide sample-wise motion refinement performed on top of block-wise motion compensation for bi-prediction.

Besides, in recent JEM versions (e.g., "Algorithm Description of Joint Exploration Test Model 7" previously discussed), a CU is no longer specified to be divided into PUs or TUs. Instead, more flexible CU sizes may be used using Quad-Tree plus Binary Tree (QTBT) partitioning structure where a CU can have either a square or rectangular shape as illustrated for CUs 310, 320, 330 and 340. The size of such block is comprised between 4x4 to 256x256. And even, another recent JEM proposal (e.g., "Asymmetric Coding Units in QTBT", Document JVET-D0064, Joint Video Exploration Team of ISO/IEC JTC1/SC29/WG11, 4th meeting, 15-21 October 2016, Chengdu, CN"), an asymmetric CU coding tool on top of the Quad-Tree plus Binary Tree (QTBT) technology is disclosed. The set of Binary Tree (BT) split modes of QTBT is extended, to support asymmetric binary splitting of a coding unit. FIG. 3 illustrates an example of divisions of a Coding Unit (CU) in an asymmetric binary tree of the Quad-Tree plus Binary Tree (QTBT) partitioning. As in QTBT, exactly one transform block and one prediction block is associated to each coding block. Each coding stage (BT split signaling, prediction, transform, entropy coding, de-blocking filter) is adapted to new rectangular block sizes as illustrated for CUs 350, 360, 370 and 380. These sizes correspond to a CU width or height multiple of 3, resulting from the division of a CU into 2 sub-CU with respective size ¼ and ¾ the size of the parent CU. In practice, this leads to a CU width and/or height potentially equal to 12 or 24.

Thus, when a linear model (such as CCLM or LIC) is to be determined for a CU of such width and/or height being 3x2^N, the complexity of the error regression performed on samples of a top and left neighboring template is greatly increased.

Besides, when a linear model (such as CCLM or LIC) is to be determined for rectangular blocks (non-square blocks) of dimensions WxH, a subsampling described for CCLM used to ensure using the same number of pixels from the left and the top sides of the block corresponding to the shorter boundary might not be optimal. In case of rectangular blocks with one dimension much smaller than the other, this may lead to inaccurate, hence sub-optimal, computation.

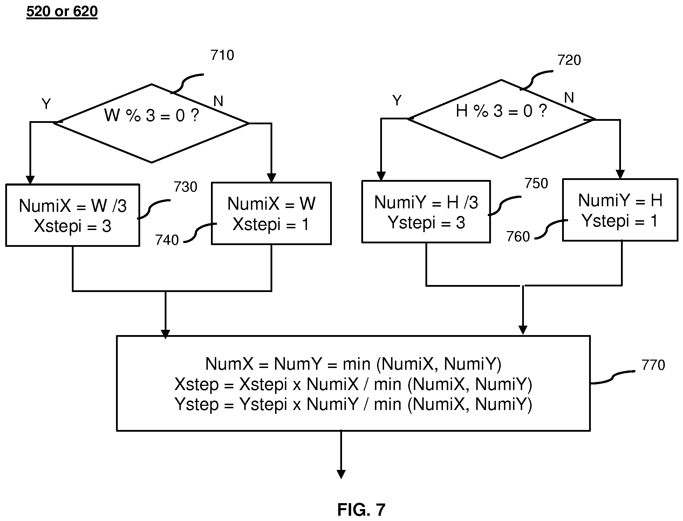

Accordingly, a general aspect of at least one embodiment aims to improve the accuracy of the linear model by determining an optimal number of the reconstructed samples of the spatial neighboring template corresponding to a power of two, the number of reconstructed samples (and the samples) being used in determining the linear model parameters. This power of two is responsive to the width and the height of the block being encoded or decoded. Advantageously, the number of selected samples in a spatial template is also optimized for blocks having at least one dimension that follows 3x2^N. Besides, the number of selected samples in a spatial template is optimized in the case where the width and the height of the block being encoded or decoded are not equal. According to at least one embodiment, for blocks having a dimension following 3x2^N, only 1 out of 3 samples is used to derive the linear model, and the subsampling is adapted in the direction of the bigger dimension to ensure to have the same number of pixels coming from the left and above neighborhoods. Others alternative embodiment are described hereafter with FIG. 7 to 10.

The present principles are advantageously implemented in an encoder in the intra prediction module 160 and the motion compensation module 170 of Figure 1 or in a decoder, in the intra prediction module 260 and in the motion compensation module 275 of Figure 2.

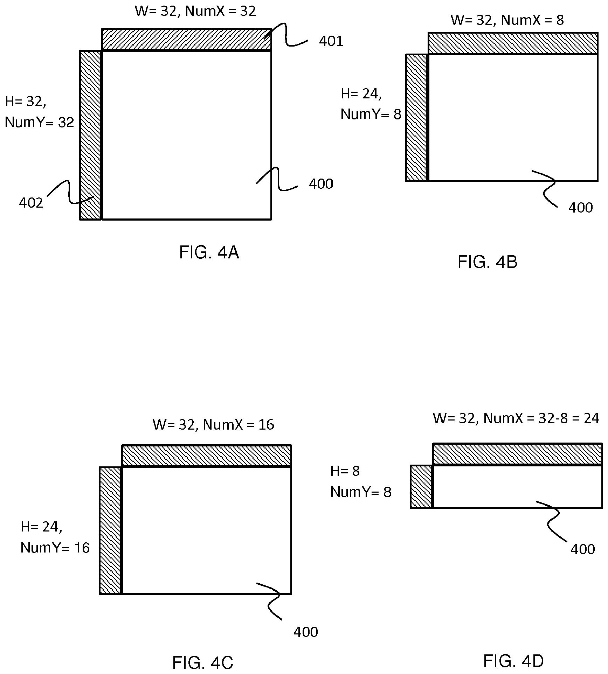

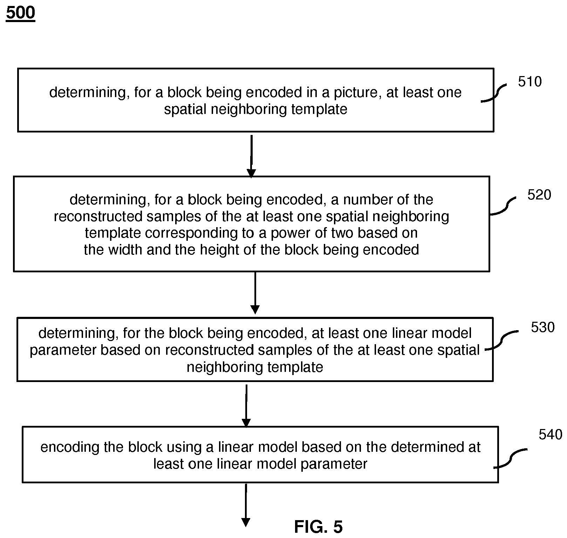

FIG. 5 illustrates an exemplary encoding method 500 according to a general aspect of at least one embodiment. As explained for exemplary embodiments as the cross-component linear model (CCLM) prediction mode or the Local Illumination Compensation (LIC), the method 500 determines at least one linear model parameter based on reconstructed samples of at least one spatial neighboring template of the block being encoded. Such linear model parameter comprises for instance an affine coefficient of the model as defined in equation 3, 4 or 6, 7. Thus a linear model belongs to a set comprising cross-component linear model; block-based illumination compensation linear model; bi-directional optical flow. First, at 510, the method 500 determines, for a block being encoded in a picture, at least one spatial neighboring template. As shown on FIG. 4A to 4D, according to various block partitioning, the spatial neighboring template 401, 402 is of various size. FIG. 4A illustrates the case where the block 400 being encoded is a square block with width W and height H being a power of two, for instance W = H = 32. The unit of width W and height H is the image sample. Thus, the two neighboring templates 401, 402 of reconstructed samples are determined for the block 400. The size of the top neighboring template 401 is 32 x 1 samples and the size of the left neighboring template is 1x 32 samples. The skilled in the art will appreciate that depending of the position of the block in the image and of the scanning order in the decoding, the block being encoded or decoded has zero (for the first block for of an image), one (left or top neighboring) or two neighboring templates of reconstructed pixels. Besides, the skilled in the art will notice that a spatial neighboring template 401, 402 comprises each neighboring sample of the block being processed among a line 401 of top neighboring samples, and a line 402 of left neighboring samples. The various embodiments exposed for the general case with top and left templates are easily adapted for the case with only one neighboring template being top or left. At 520, the method 500 determines, for a block being encoded, a number of the reconstructed samples of the at least one spatial neighboring template corresponding to a power of two based on the width and the height of the block being encoded. Thus, for the exemplary case of FIG. 4A, the number NumX of the reconstructed samples of the top neighboring template and the number NumY of the reconstructed samples of the left neighboring template are set to 32 = 2^5. At 530, the method 500 determines, for the block being encoded, at least one linear model parameter based on reconstructed samples of the at least one spatial neighboring template. Indeed, the method selects the determined number NumX and NumY of samples among the neighboring samples to perform the processing resulting in the linear model. For instance, a linear model parameter is an affine coefficient as defined in equation 3,4 or 6,7 responsive to the values of the Numx and NumY reconstructed samples in the neighborhood. The linear model parameters based on reconstructed samples of the at least one spatial neighboring template are obtained by minimizing a distortion between samples of the spatial neighboring template of the block being encoded or decoded and samples of the spatial neighboring template of a reference block for the block being encoded or decoded. The division by 2^5 in the equations solving the minimization can simply implemented by a right shift. Finally, at 540, the method 500 encodes the block using a linear model based on the determined at least one linear model parameter such as exposed for CCLM or LIC.

FIG. 4A illustrates an example where the block size, and thus the number of reconstructed samples used in the linear model computation is natively of power of two and equal for left and top neighborhood. Thus, the known determining of linear model parameter is well adapted to this partition. However, FIG. 4B, 4C and 4D illustrates examples where the determining of linear model parameter lead to inaccurate, hence sub-optimal, computation.

FIG. 4B illustrates the case where the block 400 being encoded is a rectangular block with height H being 3x 2^N, namely H = 24 and W = 32. According to one embodiment exposed in FIG. 7, the number NumX of reconstructed samples of the top neighboring template and the number NumY of reconstructed samples of the left neighboring template are set to 8 = 2^3. In two words, the samples of the left template are subsampled to keep 1 out of 3 samples, ie 24/3 = 8, the samples of the top template are subsampled to keep 1 out of 4 so that the number NumX of reconstructed samples of the top neighboring template and the number NumY of reconstructed samples of the left neighboring template used in linear model computation are equal and set to 8.

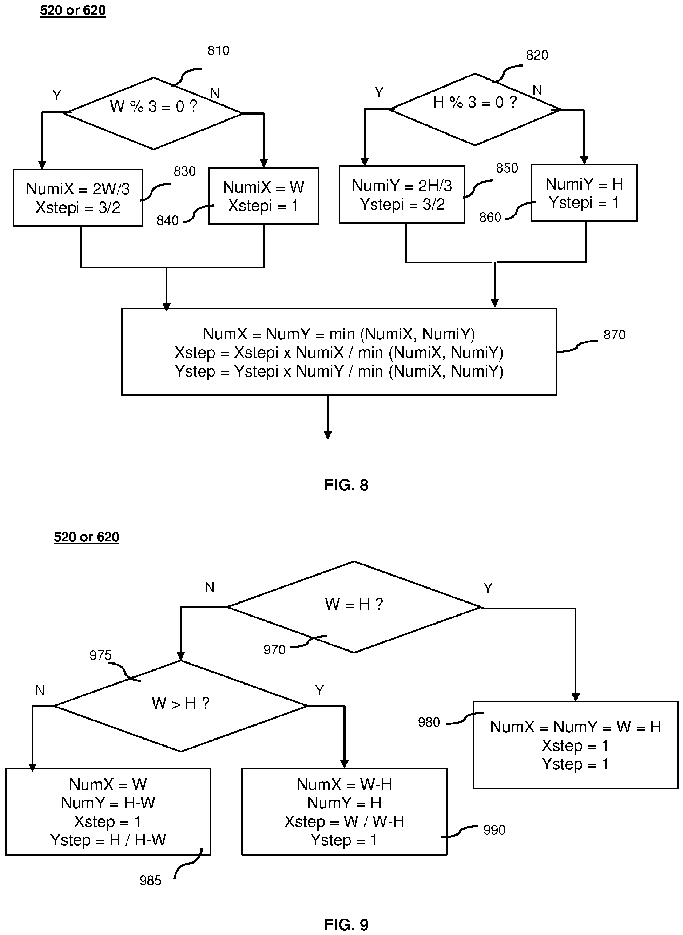

FIG. 4C illustrates another embodiment in the case where the block 400 being encoded is a rectangular block with height H being 3x 2^N, namely H = 24 and W = 32. According to one embodiment exposed in FIG. 8, the number NumX of reconstructed samples of the top neighboring template and the number NumY of reconstructed samples of the left neighboring template are set to 16 = 2^4. In two words, the samples of the left template are subsampled to keep 2 out of 3 samples, ie 24*2/3 = 16, the samples of the top template are then subsampled to keep 1 out of 2 so that the number NumX of reconstructed samples of the top neighboring template and the number NumY of reconstructed samples of the left neighboring template used in linear model computation are equal and set to 16.

FIG. 4D illustrates the case where the block 400 being encoded is a rectangular block with one dimension much smaller than the other, namely H = 8 and W = 32. According to one embodiment exposed in FIG. 9, the sum of number NumX of reconstructed samples of the top neighboring template and the number NumY of reconstructed samples of the left neighboring template are set to 32 = 2^8. In two words, the samples of the left template being the smallest are kept in the computation and their number NumY = 8 are removed from the number of the samples of the top template to keep NumX = 32 -8 = 24 samples in the top template so that the sum number NumX = 24 of the reconstructed samples of the top neighboring template and the number NumY = 8 of the reconstructed samples of the left neighboring template used in linear model computation are equal and set to 32.

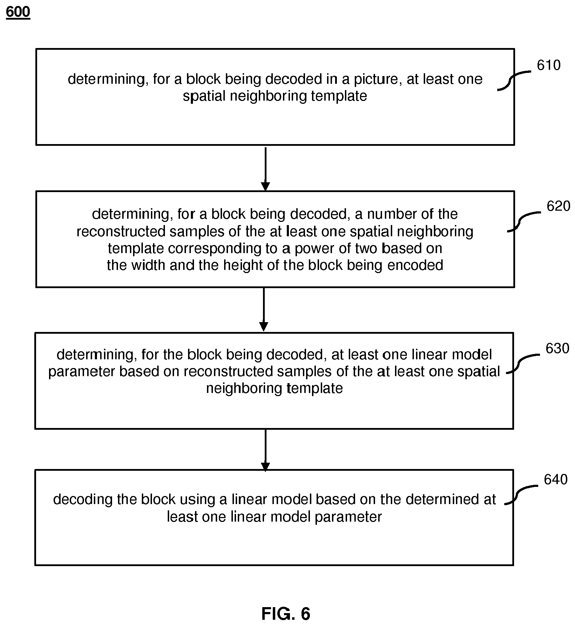

FIG. 6 illustrates an example of a decoding method according to a general aspect of at least one embodiment. The skilled in the art will appreciate that the same principles apply to the encoding method 500 and to the decoding method 700. Accordingly, the method 600 determines at least one linear model parameter based on reconstructed samples of at least one spatial neighboring template of the block being decoded. Such linear model parameter is for instance an affine coefficient of the model as defined in equation 3, 4 or 6, 7. First, at 610, the method 600 determines, for a block being decoded in a picture, at least one spatial neighboring template as illustrated with exemplary embodiments of FIG. 4A to 4D. Thus, 2 neighboring templates 401, 402 of reconstructed samples are determined for the block 400.

The size of the top neighboring template 401 is W x1 samples and the size of the left neighboring template is 1x H samples. At 620, the method 600 determines, for a block being decoded, a number of reconstructed samples of the at least one spatial neighboring template corresponding to a power of two based on the width and the height of the block being decoded. Thus, for the exemplary case of FIG. 4A, the number NumX of reconstructed samples of the top neighboring template and the number NumY of reconstructed samples of the left neighboring template are set to 32 = $2^5$. Naturally, the number NumX of reconstructed samples of the top neighboring template and the number NumY of reconstructed samples of the left neighboring template are also determined according to various embodiment as illustrated with FIG. 4B-4D. At 630, the method 600 determines, for the block being decoded, at least one linear model parameter based on reconstructed samples of the at least one spatial neighboring template. For instance, the affine coefficients as defined in equation 3,4 or 6,7 are computed based on the values of NumX and NumY reconstructed samples in the neighborhood. The division by $2^5$ for the exemplary example of FIG. 4A in the equations can simply be implemented by a right shift. Finally, at 640, the method 600 decodes the block using a linear model based on the determined at least one linear model parameter such as exposed for CCLM or LIC.

FIG. 7 illustrates an exemplary detail of the determining 520, 620 of the number of the reconstructed samples of the encoding method 500 or of the decoding method 600 according to an aspect of at least one embodiment particularly adapted when the neighboring block has at least a dimension of $3x2^N$. The skilled in the art, will appreciate that this case occurs considering the asymmetric Coding Units in QTBT, where either width W, or height H or both W, H is of size $3x2^N$. According to this embodiment, the samples of the templates are successively subsampled to keep 1 sample out of 3 (NumiX, NumiY) and to keep a same number in both templates (NumX, NumY). Thus, at 710, the width W is tested to check if it is a multiple of 3, W % 3 = 0 ?, where % represents the modulo operator. In case where the width of the block being encoded or decoded is a multiple of 3 (branch Y), $W = 3x 2^N$, the determined number of reconstructed samples NumiX of a top spatial neighboring template is divided by 3 at 730. In other words, the number of reconstructed samples NumiX corresponds to the width of the block being processed divided by 3, NumiX = W / 3. According to a variant, instead of determining the number of reconstructed samples NumiX, a subsampling step Xstepi is determined, Xstepi = 3. In case where the width of the block being processed is a not multiple of 3 (branch N), then according to the considered block partition the width of the block being processed is a power of 2 ($W = 2^N$), the determined number of reconstructed samples NumiX of a top spatial neighboring template is keep unchanged, i.e. set to W at 740.

According to the variant of the subsampling, the subsampling step Xstepi is set to 1, Xstepi = 1.

The same process is respectively applied to the height H of the block at 720, 750 and 760. At 720, the height H is tested to check if it is a multiple of 3. In case where the height of the block being processed is a multiple of 3 (branch Y), $H = 3x 2^N$, the determined number of reconstructed samples NumiY of the left spatial neighboring template is divided by 3 at 750. In case where the height H of the block being processed is a not multiple of 3 (branch N), the determined number of reconstructed samples NumiY of a left spatial neighboring template is keep unchanged, i.e. set to H at 760. Of course, in a preliminary step not represented on FIG. 7, the existence of a top spatial neighboring template and of a left spatial neighboring template are checked and the method may easily be adapted to the existing spatial neighboring template for instance by setting the value of W or H to 0 in case the absence of causal block.

Then at 770, the number of samples NumY in the left spatial neighboring template and the number of samples NumX in the top spatial neighboring template are normalized to keep a same number in both templates. In case the width of the block being processed is not equal to the height of the block being processed, the determined number of reconstructed samples of the top spatial neighboring template and the determined number of reconstructed samples of the left spatial neighboring template are set to a same value being a power of two corresponding to the smallest dimension of the block being processed. Implemented in this embodiment, the intermediate numbers NumiX and NumiY are tested at 770 to check if a same number of samples can be used in top and left neighborhood to compute the linear model parameters. The determined number of reconstructed samples NumX of a top spatial neighboring template is set to the minimum value of the intermediate numbers NumiX and NumiY. According to the variant of the subsampling, the intermediate subsampling step Xstepi is multiplied by the ratio NumiX / min (NumiX, NumiY), thus Xstep = Xstepi x NumiX / min (NumiX, NumiY). Besides, the determined number of reconstructed samples NumY of a left spatial neighboring template is set to the minimum value of the intermediate number NumiX and NumiY. According to the variant of the subsampling, the intermediate subsampling step Ystepi is multiplied by the ratio NumiY / min (NumiX, NumiY), thus Ystep = Ystepi x NumiX / min (NumiX, NumiY). The subsampling step is used to determine in the step 530 of the encoding method or in the step 630 of the decoding method that respectively 1 sample out Xstep samples for a top template or 1 sample out Ystep samples for left template are used in the computation for determining the linear model parameter. The selected samples can be regularly distributed along the template or only first one is kept. Any selection of the number of samples is compatible with the present principles. The skilled in the art will appreciate that the values Step and Num are redundant and that only one of the 2 values might be determined in the present embodiments.

Thus, the embodiment of FIG. 7 combines 2 features, the normalization for block of size 3x2^N and the normalization to have a same number in both spatial neighboring template. An example of such embodiment is illustrated on FIG 4B. With W = 32 and H = 24, after the step 740 and 750, NumiX = 32 (Xstepi= 1) and NumiY = 8 (Ystepi= 3) and finally after step 770, NumX = 8 (Xstep= 4) and NumY = 8 (Ystep= 3).

Therefore, the present inventors have recognized the potential advantages in several ways to improve the computation of a linear model parameter by determining a number of samples being a power of 2 using any of the block partition of the existing JEM codecs.

FIG. 8 illustrates an exemplary detail of the determining 520, 620 of number of the reconstructed samples of the encoding method 500 or of the decoding method 600 according to another embodiment adapted to the case where the neighboring block has at least a dimension of 3x2^N. According to this embodiment, the samples of the templates are subsampled to keep 2 sample out of 3 (NumiX, NumiY) and to keep a same number in both templates (NumX, NumY). Thus, at 810, the width W is tested to check if it is a multiple of 3, W % 3 = 0 ?, where % represents the modulo operator. In case where the width of the block being encoded or decoded is a multiple of 3 (branch Y), W = 3x 2^N, the determined number of reconstructed samples NumiX of a top spatial neighboring template is multipled by 2/3 at 830. In other words, the number of reconstructed samples NumiX corresponds to the width of the block being processed multiplied by 2/3, NumiX = 2xW / 3. According to the variant of subsampling, the subsampling step Xstepi is set to 3/2. In case where the width of the block being processed is a not multiple of 3 (branch N), then according to considered block partition the width of the block being processed is a power of 2 (W = 2^N), the determined number of reconstructed samples NumiX of a top spatial neighboring template is keep unchanged, i.e. set to W at 840. According to the variant of the subsampling, the subsampling step Xstepi is set to 1.

The same process is respectively applied to the height H of the block at 820, 850 and 860. At 820, the height H is tested to check if it is a multiple of 3. In case where the height of the block being processed is a multiple of 3 (branch Y), H = 3x 2^N, the determined number of reconstructed samples NumiY of the left spatial neighboring template is multiplied by 2/3 at 850. In case where the height H of the block being processed is a not multiple of 3 (branch N), the determined number of reconstructed samples NumiY of a left spatial neighboring template is keep unchanged, i.e. set to H at 860. Then at 870, the number of samples NumY in the left spatial neighboring template and the number of samples NumX in the top spatial neighboring template are normalized to keep a same number in both templates as described for FIG. 7. In case the width of the block being processed is not equal to the height of the block being processed, the determined number of reconstructed samples of the top spatial neighboring template and the determined number of reconstructed samples of the left spatial neighboring template are set to a same value being a power of two corresponding to the smallest dimension of the block being processed. Implemented in this embodiment, the intermediate numbers NumiX and NumiY are tested at 870 to check if a same number of samples can be used in top and left neighborhood to compute the linear model parameters. The determined number of reconstructed samples NumX of a top spatial neighboring template, respectively NumY of a left spatial neighboring template is set to the minimum value of intermediate number NumiX and NumiY.

Thus, the embodiment of FIG. 8 combines 2 features, the normalization by 2/3 for block of size 3x2^N and the normalization to have a same number in both spatial neighboring template. An example of such embodiment is illustrated on FIG 4C. With W = 32 and H = 24, after the step 840 and 850, NumiX = 32 (Xstepi= 1) and NumiY = 16 (Ystepi=3/2) and finally after step 870, NumX = 16 (Xstep= 2) and NumY = 16 (Ystep=3/2).

Therefore, such embodiment increases the number of samples used the computation of a linear model parameter compared to the previously described embodiment thus improving the accuracy of the model.

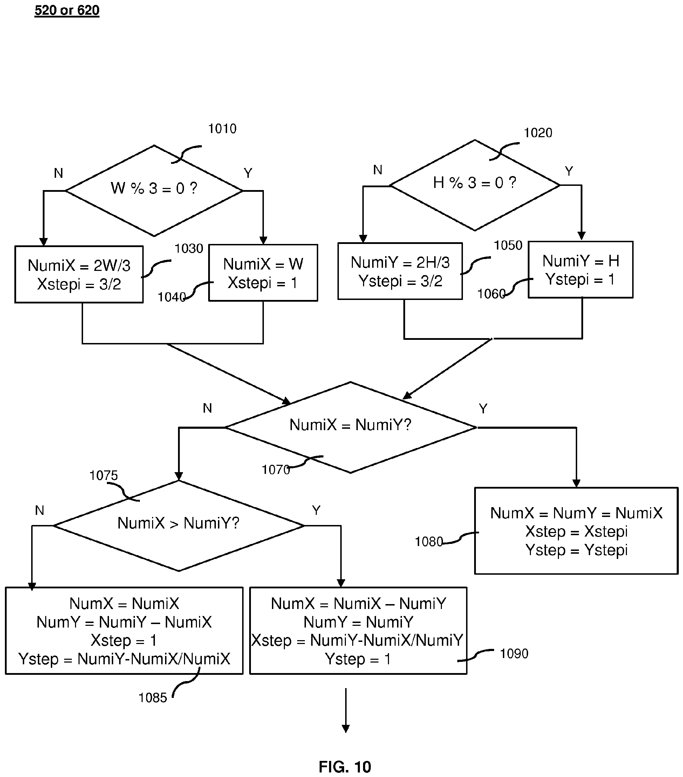

FIG. 9 illustrates an exemplary detail of the determining 520, 620 of number of the reconstructed samples of the encoding method 500 or of the decoding method 600 according to another embodiment adapted to the case where the neighboring block has at least a non-square dimension, in particular when one dimension is much larger than the other. However, this embodiment also solves the issue raised by a block with one dimension (the smallest dimension) not being equal to a power of two. This embodiment is presented without the features of normalization for block of size 3x2^N but of course both features are compatible as shown in FIG. 10.

Thus at 970, the number of samples NumY in the left spatial neighboring template and the top spatial neighboring template NumX are tested to check if there is a same number in both templates. In case the width of the block being processed is equal (branch Y) to the height of the block being processed, the block is square and the determined number of reconstructed samples of the top spatial neighboring template and the determined number of reconstructed samples of the left spatial neighboring template are set to a same value being a power of two corresponding to the height and width at 980. No subsampling is required and Xstep, Ystep are set to 1. In case the width of the block being processed is not equal (branch N) to the height of the block being processed, then the sum of the determined number NumX of reconstructed samples of a top spatial neighboring template and of the determined number NumY of reconstructed samples of a left spatial neighboring template is set to a power of two corresponding to the largest dimension of the block being encoded or decoded. To that end, the largest value is tested at 975. In case the block width is larger than the block height (branch Y), at 990, the determined number of reconstructed samples of the left spatial neighboring template NumY is set to H being the smallest dimension of the block and, the number of reconstructed samples of the top spatial neighboring template NumX is set to W-H so that the sum NumX + NumY is equal to a power of two corresponding to the largest dimension of the block being encoded or decoded. Accordingly, for the variant of subsampling, Xstep is set to W/W-H (W-H out of W sample are used) and Ystep is set to 1 (all samples are used, 1 out of 1). In the other case (branch N) where the block width is smaller than the block height (branch N), at 985, the determined number of reconstructed samples of the top spatial neighboring template NumX is set to W being the smallest dimension of the block and, the number of reconstructed samples of the left spatial neighboring template NumY is set to H-W. Accordingly, for the variant of subsampling, Xstep is set to 1 and Ystep is set to H/H-W.

Thus, the embodiment of FIG. 9 maximizes the number of samples in the computation of the linear model in particular when width and height are quite different. As illustrated by the example of FIG. 4D. With W = 32 and H = 8, after the step 970, NumX = 32-8 = 8 and NumY = 8 while the embodiment of FIG. 7, the number of used samples would be NumX = NumY = 8, resulting in 16 total samples used instead of 32 in the present embodiment. Besides, it should be highlighted that with the present embodiment, a more important relative weight is given to the neighboring template of the larger dimension, for instance to NumX = 24 compared to NumY = 8. Such embodiment thus improves the accuracy of the model since the weight of the larger template is increased in the linear model computation.

FIG. 10 illustrates an example of the determining of number of the reconstructed samples method according to a general aspect of at least one embodiment. The embodiment of FIG. 10 combines the 2 features, the normalization for block of size 3x2^N and the normalization to have the sum of the numbers in both spatial neighboring template being a power of two.

The samples of the templates are subsampled to keep 2 sample out of 3 (NumiX, NumiY) at 1030 and 1050. Thus, at 1010, the width W is tested to check if it is a multiple of 3, W % 3 = 0 ?. In case where the width of the block being encoded or decoded is a multiple of 3 (branch Y), W = 3x 2^N, the determined number of reconstructed samples NumiX of a top spatial neighboring template is multipled by 2/3 at 1030. According to the variant of subsampling, the subsampling step Xstepi is set to 3/2. In case where the width of the block being processed is a not multiple of 3 (branch N), then according to considered block partition the width of the block being processed is a power of 2 (W = 2^N), the determined number of reconstructed samples NumiX of a top spatial neighboring template is keep unchanged, i.e. set to W at 1040. According to the variant of the subsampling, the subsampling step Xstepi is set to 1. The same process is respectively applied to the height H of the block at 1020, 1050 and 1060.

Then, at 1070, the resulting number of samples is tested check whether there exist a larger dimension NumXi = NumYi ?. In case the numbers NumXi and NumYi of samples after the first regularization are equal (branch Y), then the determined number NumX of reconstructed samples of a top spatial neighboring template and of the determined number NumY of reconstructed samples of a left spatial neighboring template are equal and set to a power of two at 1080. In case the numbers NumXi and NumYi of samples after the first regularization are not equal (branch N), then the sum of the determined number NumX of reconstructed samples of a top spatial neighboring template and of the determined number NumY of reconstructed samples of a left spatial neighboring template is set to a power of two corresponding to the largest dimension of the template after the first regularization. To that end, the largest value is tested at 1075. In case the determined number of reconstructed samples NumiX of a top spatial neighboring is larger than the determined number of reconstructed samples NumiY of a left spatial neighboring t (branch Y), at 1090, the determined number of reconstructed samples of the left spatial neighboring template NumY is set to NumiY and the number of reconstructed samples of the top spatial neighboring template NumX is set to NumiX-NumiY so that the sum NumX + NumY is equal to a power of two corresponding to the largest dimension of the templates after the first subsampling. In the other case (branch N), at 1085, the determined number of reconstructed samples of the top spatial neighboring template NumX is set to NumiX and, the number of reconstructed samples of the left spatial neighboring template NumY is set to NumiY-NumiX.

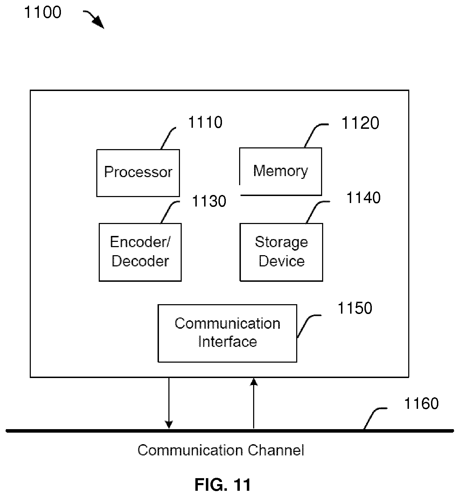

FIG. 11 illustrates a block diagram of an exemplary system 1100 in which various aspects of the exemplary embodiments may be implemented. The system 1100 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. The system 1100 may be communicatively coupled to other similar systems, and to a display via a communication channel as shown in FIG. 11 and as known by those skilled in the art to implement all or part of the exemplary video systems described above.

Various embodiments of the system 1100 include at least one processor 1110 configured to execute instructions loaded therein for implementing the various processes as discussed above. The processor 1110 may include embedded memory, input output interface, and various other circuitries as known in the art. The system 1100 may also include at least one memory 1120 (e.g., a volatile memory device, a non-volatile memory device). The system 1100 may additionally include a storage device 1140, which may include non-volatile memory, including, but not limited to, EEPROM, ROM, PROM, RAM, DRAM, SRAM, flash, magnetic disk drive, and/or optical disk drive. The storage device 1140 may comprise an internal storage device, an attached storage device, and/or a network accessible storage device, as non-limiting examples. The system 1100 may also include an encoder/decoder module 1130 configured to process data to provide encoded video and/or decoded video, and the encoder/decoder module 1130 may include its own processor and memory.

The encoder/decoder module 1130 represents the module(s) that may be included in a device to perform the encoding and/or decoding functions. As is known, such a device may include one or both of the encoding and decoding modules. Additionally, the encoder/decoder module 1130 may be implemented as a separate element of the system 1100 or may be incorporated within one or more processors 1110 as a combination of hardware and software as known to those skilled in the art.

Program code to be loaded onto one or more processors 1110 to perform the various processes described hereinabove may be stored in the storage device 1140 and subsequently loaded onto the memory 1120 for execution by the processors 1110. In accordance with the exemplary embodiments, one or more of the processor(s) 1110, the memory 1120, the storage device 1140, and the encoder/decoder module 1130 may store one or more of the various items during the performance of the processes discussed herein above, including, but not limited to the input video, the decoded video, the bitstream, equations, formulas, matrices, variables, operations, and operational logic.

The system 1100 may also include a communication interface 1150 that enables communication with other devices via a communication channel 1160. The communication interface 1150 may include but is not limited to a transceiver configured to transmit and receive data from the communication channel 1160. The communication interface 1150 may include, but is not limited to, a modem or network card and the communication channel 1150 may be implemented within a wired and/or wireless medium. The various components of the system 1100 may be connected or communicatively coupled together (not shown in FIG. 11) using various suitable connections, including, but not limited to internal buses, wires, and printed circuit boards.

The exemplary embodiments may be carried out by computer software implemented by the processor 1110 or by hardware, or by a combination of hardware and software. As a non-limiting example, the exemplary embodiments may be implemented by one or more integrated circuits. The memory 1120 may be of any type appropriate to the technical environment and may be implemented using any appropriate data storage technology, such as optical memory devices, magnetic memory devices, semiconductor-based memory devices, fixed memory, and removable memory, as non-limiting examples. The processor 1110 may be of any type appropriate to the technical environment, and may encompass one or more of microprocessors, general purpose computers, special purpose computers, and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Furthermore, one skilled in the art may readily appreciate that the exemplary HEVC encoder 100 shown in FIG. 1 and the exemplary HEVC decoder shown in FIG. 2 may be modified according to the above teachings of the present disclosure in order to implement the disclosed improvements to the exiting HEVC standards for achieving better compression/decompression. For example, motion compensation 170, and motion estimation 175 in the exemplary encoder 100 of FIG. 1, and motion compensation 275, in the exemplary decoder of FIG. 2 may be modified according to the disclosed teachings to implement one or more exemplary aspects of the present disclosure including providing an enhanced affine model determination to the existing JEM.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1. A method (500) for video encoding, comprising:

   determining (510), for a block being encoded in a picture, at least one spatial neighboring template;
   determining (530), for the block being encoded, at least one linear model parameter based on reconstructed samples of the at least one spatial neighboring template; and
   encoding (540) the block using a linear model based on the determined at least one linear model parameter;
   the method being **characterized in that** it further comprises determining (520) a number of reconstructed samples of the at least one spatial neighboring template corresponding to a power of two, said number of reconstructed samples being used in determining the at least one linear model parameter, said power of two being responsive to the width and the height of the block being encoded.

2. A method (600) for video decoding, comprising:

   determining (610), for a block being decoded, at least one spatial neighboring template;
   determining (630), for the block being decoded, at least one linear model parameter based on reconstructed samples of the at least one spatial neighboring template; and
   decoding (640) the block using a linear model based on the determined at least one linear model parameter;
   the method being **characterized in that** it further comprises determining (620) a number of reconstructed samples of the at least one spatial neighboring template corresponding to a power of two, said number of reconstructed samples being used in determining the at least one linear model parameter, said power of two being responsive to the width and the height of the block being decoded.

3. An apparatus (1100) for video encoding, comprising:

   means for determining, for a block being encoded in a picture, at least one spatial neighboring template;
   means for determining, for the block being encoded, at least one linear model parameter based on reconstructed samples of the at least one spatial neighboring template; and
   means for encoding the block using a linear model based on the determined at least one linear model parameter;
   the apparatus being **characterized in that** it further comprises means for determining a number of reconstructed samples of the at least one spatial neighboring template corresponding to a power of two, said number of reconstructed samples being used in said means for determining the at least one linear model parameter, said power of two being responsive to the width and the height of the block being encoded.

4. An apparatus (1100) for video decoding, comprising:

means for determining, for a block being decoded, at least one spatial neighboring template;
means for determining, for the block being decoded, at least one linear model parameter based on reconstructed samples of the at least one spatial neighboring template; and
means for decoding the block using a linear model based on the determined at least one linear model parameter; the apparatus being **characterized in that** it further comprises means for determining a number of reconstructed samples of the at least one spatial neighboring template corresponding to a power of two, said number of reconstructed samples being used in determining the at least one linear model parameter, said power of two being responsive to the width and the height of the block being decoded.

5. The method of claim 1 or 2 or the apparatus of claim 3 or 4, wherein the at least one spatial neighboring template comprises each sample among samples a top neighboring line of the block being encoded or decoded, and among samples of a left neighboring line of the block being encoded or decoded.

6. The method of claim 1, 2 or 5 or the apparatus of claim 3, 4 or 5, wherein at least one of said width and height of the block being encoded or decoded is not equal to a power of two.

7. The method of claim 1, 2 or 5 or the apparatus of claim 3, 4 or 5, wherein at least one of said width and height of the block being encoded or decoded are not equal.

8. The method of claim 6 or the apparatus of claim 6, wherein in case the width of the block being encoded or decoded is a multiple of 3, the determined number of reconstructed samples of a top spatial neighboring template is divided by 3 and wherein in case the height of the block being encoded or decoded is a multiple of 3, the determined number of reconstructed samples of a left spatial neighboring template is divided by 3.

9. The method of claim 6 or the apparatus of claim 6, wherein in case the width of the block being encoded or decoded is a multiple of 3, the determined number of reconstructed samples of a top spatial neighboring template is multiplied by 2/3 and wherein in case the height of the block being encoded or decoded is a multiple of 3, the determined number of reconstructed samples of a left spatial neighboring template is multiplied by 2/3.

10. The method of any of claims 7 to 9 or the apparatus of any of claims 7 to 9, the determined number of reconstructed samples of a top spatial neighboring template and the determined number of reconstructed samples of a left spatial neighboring template are set to a same value being a power of two corresponding to the smallest dimension of the block being encoded or decoded.

11. The method of any of claims 7 to 9 or the apparatus of any of claims 7 to 9, the sum of the determined number of reconstructed samples of a top spatial neighboring template and of the determined number of reconstructed samples of a left spatial neighboring template is set to a power of two corresponding to the largest dimension of the block being encoded or decoded.

12. The method of any of claims 1, 2, 5 to 11 or the apparatus of claim 3, 4 or 5 to 11, wherein the linear model belongs to a set comprising:

    - cross-component linear model;
    - block based illumination compensation linear model;
    - bi-directional optical flow.

13. The method of any of claims 1, 2, 5 to 12 or the apparatus of claim 3, 4 or 5 to 12, wherein the at least one linear model parameter based on reconstructed samples of the at least one spatial neighboring template are obtained by minimizing a distortion between samples of the spatial neighboring template of the block being encoded or decoded and samples of the spatial neighboring template of a reference block.

14. A computer program product comprising instructions for performing the method of any of the preceding claims when executed by one of more processors.

**FIG. 1**

**FIG. 2**

**FIG. 3**

W= 32, NumX = 32

401

H= 32,
NumY= 32

402

400

FIG. 4A

W= 32, NumX = 8

H= 24,
NumY= 8

400

FIG. 4B

W= 32, NumX = 16

H= 24,
NumY= 16

400

FIG. 4C

W= 32, NumX = 32-8 = 24

H= 8
NumY= 8

400

FIG. 4D

500

| determining, for a block being encoded in a picture, at least one spatial neighboring template | 510 |

| determining, for a block being encoded, a number of the reconstructed samples of the at least one spatial neighboring template corresponding to a power of two based on the width and the height of the block being encoded | 520 |

| determining, for the block being encoded, at least one linear model parameter based on reconstructed samples of the at least one spatial neighboring template | 530 |

| encoding the block using a linear model based on the determined at least one linear model parameter | 540 |

FIG. 5

600

┌─────────────────────────────────────────────────────────┐
│  determining, for a block being decoded in a picture, at least one  │ ⟋ 610
│  spatial neighboring template                           │
└─────────────────────────────────────────────────────────┘
                            │
                            ▼
┌─────────────────────────────────────────────────────────┐
│  determining, for a block being decoded, a number of the  │ ⟋ 620
│  reconstructed samples of the at least one spatial neighboring  │
│  template corresponding to a power of two based on        │
│  the width and the height of the block being encoded      │
└─────────────────────────────────────────────────────────┘
                            │
                            ▼
┌─────────────────────────────────────────────────────────┐
│  determining, for the block being decoded, at least one linear model  │ ⟋ 630
│  parameter based on reconstructed samples of the at least one spatial  │
│  neighboring template                                    │
└─────────────────────────────────────────────────────────┘
                            │
                            ▼
┌─────────────────────────────────────────────────────────┐
│  decoding the block using a linear model based on the determined at  │ ⟋ 640
│  least one linear model parameter                        │
└─────────────────────────────────────────────────────────┘

FIG. 6

520 or 620

NumX = NumY = min (NumiX, NumiY)
Xstep = Xstepi x NumiX / min (NumiX, NumiY)
Ystep = Ystepi x NumiY / min (NumiX, NumiY)

FIG. 7

520 or 620

**FIG. 8**

520 or 620

**FIG. 9**

**520 or 620**

FIG. 10

1100

FIG. 11

Europäisches
Patentamt

European
Patent Office

Office européen
des brevets

# EUROPEAN SEARCH REPORT

Application Number

EP 18 30 5073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/091759 A1 (QUALCOMM INC [US]) 1 June 2017 (2017-06-01) * abstract * * paragraphs [0006], [0056] - [0060], [0067], [0070] - [0071], [0096], [0115], [0135] - [0136], [0247] - [0249] * | 1-14 | INV. H04N19/105 H04N19/593 H04N19/186 H04N19/157 |
| X | WO 2016/155641 A1 (MEDIATEK INC [CN]) 6 October 2016 (2016-10-06) * paragraphs [0016] - [0019], [0054] - [0055] * | 1-5,7, 12-14 | |
| A,D | "Asymmetric Coding Units in QTBT(JVET-D0064)", JOINT VIDEO EXPLORATION TEAM OF ITU-T SG 16 WP 3 AND ISO/IEC JTC1/SC29/WG11, 4TH MEETING, 15 October 2016 (2016-10-15), - 21 October 2016 (2016-10-21), XP030150297, * the whole document * | 1-14 | |

TECHNICAL FIELDS
SEARCHED (IPC)

H04N

The present search report has been drawn up for all claims

| Place of search | Date of completion of the search | Examiner |
|---|---|---|
| Berlin | 10 July 2018 | Santos Luque, Rocio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 5073

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2018

| Patent document cited in search report | Publication date | Patent family member(s) | Publication date |
|---|---|---|---|
| WO 2017091759 A1 | 01-06-2017 | AU 2016359155 A1 | 26-04-2018 |
| | | AU 2016359165 A1 | 26-04-2018 |
| | | AU 2016359168 A1 | 26-04-2018 |
| | | AU 2016359171 A1 | 10-05-2018 |
| | | CN 108293112 A | 17-07-2018 |
| | | CN 108293119 A | 17-07-2018 |
| | | CN 108293137 A | 17-07-2018 |
| | | TW 201722156 A | 16-06-2017 |
| | | TW 201722157 A | 16-06-2017 |
| | | TW 201729592 A | 16-08-2017 |
| | | TW 201729593 A | 16-08-2017 |
| | | US 2017150156 A1 | 25-05-2017 |
| | | US 2017150176 A1 | 25-05-2017 |
| | | US 2017150183 A1 | 25-05-2017 |
| | | US 2017150186 A1 | 25-05-2017 |
| | | WO 2017091759 A1 | 01-06-2017 |
| | | WO 2017091770 A1 | 01-06-2017 |
| | | WO 2017091773 A1 | 01-06-2017 |
| | | WO 2017091776 A1 | 01-06-2017 |
| WO 2016155641 A1 | 06-10-2016 | CA 2981185 A1 | 06-10-2016 |
| | | EP 3257249 A1 | 20-12-2017 |
| | | SG 11201708024Q A | 30-10-2017 |
| | | US 2018131962 A1 | 10-05-2018 |
| | | WO 2016154963 A1 | 06-10-2016 |
| | | WO 2016155641 A1 | 06-10-2016 |

EPO FORM P0459

For more details about this annex : see Official Journal of the European Patent Office, No. 12/82

**REFERENCES CITED IN THE DESCRIPTION**

**Non-patent literature cited in the description**

- Algorithm Description of Joint Exploration Test Model 7. *Document JVET-G1001_v1, Joint Video Exploration Team of ISO/IEC JTC1/SC29/WG11, 7th meeting,* 13 July 2017

- Asymmetric Coding Units in QTBT. *Document JVET-D0064, Joint Video Exploration Team of ISO/IEC JTC1/SC29/WG11, 4th meeting,* 15 October 2016